# EUROPEAN PATENT APPLICATION

(11) **EP 1 630 144 A1**
(43) Date of publication of application: **01.03.2006**
(21) Application number: 04020600.5
(22) Date of filing: 31.08.2004
(51) Int. Cl.: C04B 14/42, C04B 28/02, E01C 11/18, E01C 11/22

(54) **AR glass yarn additive for pervious concretes and pervious concrete obtained with this additive**

(71) Applicant: Saint-Gobain Revetex S.r.l., 20045 Besana Brianza (Milano) (IT)
(72) Inventor: Ferrante, Antonio, 20045 Besana Brianza (Milano) (IT)
(74) Representative: Petruzziello, Aldo

(57) **Abstract**

An additive for pervious concretes, composed of an AR (Alkaline-Resistant) glass yarn in the form of flocks, in turn identified by an agglomerate or by groups of needles of said glass yarn.

With respect to prior art additives for pervious concrete, the additive according to the invention offers the advantage of being easy to mix with the aggregates and with the cements. It also offers performances of high stability, which last through time, thereby guaranteeing long-term performances of the product.

## Description

The present invention relates to a new AR glass additive for pervious concretes. The invention also relates to the pervious concrete prepared with this additive.

The field of the invention is that of additives in use for pervious or porous concretes, that is, which are permeable to water. These concretes are used advantageously to produce road and airport paving, which require high mechanical performances, together with efficient and long-lasting water draining properties.

Currently, metal, synthetic or natural fibres are added to pervious concretes. However, metal fibres are difficult to mix and obstruct laying of the product. On the other hand, natural fibres (jute, cellulose and the like) have the drawback of deteriorating rapidly through time, causing the aggregates to detach and rapid deterioration of the performances of materials. Synthetic fibres also have the drawback of deteriorating through time, and therefore do not ensure long-term mechanical and draining performances of the product.

The object of the invention is to overcome the aforesaid drawbacks of prior art, providing an additive for pervious or porous concretes which is easier to mix, long-lasting and suitable to increase the mechanical properties of the product.

These and other objects and characteristics are attainable with the additive and with the pervious concrete claimed respectively in claims 1 and 9. Preferred embodiments of the invention are claimed in the remaining claims.

With respect to prior art additives for pervious concretes, the additive according to the invention offers the advantage of being easy to mix with aggregates and with cements. Moreover, it offers performances of high stability, which last through time, thereby guaranteeing long-term performances of the product.

In particular, pervious concrete, with the addition of the yarn according to the invention, attains a permeability with respect to water of 8 litres/10 sec.cm² compared to 5 litres/10 sec.cm² of a prior art pervious concrete.

The additive of the invention also provides the product with a high stability, which prevents subsequent phenomena of compaction or structural collapse, to the advantage of the draining efficacy of the laid concrete.

In fact, the additive of the invention realizes a real reinforcement within the concrete material, thereby increasing their mechanical performance even when depths are limited. It is therefore possible to restrict the tear forces caused to transiting loads, to limit the negative effects due to forces produced by thermal differences and to eliminate fissurations. Finally, as it is an inert product, the additive of the invention creates no chemical reaction with the other components of the mixture.

The additive of the invention is composed of an AR (Alkaline-Resistant) glass yarn in the form of flocks, which are in turn composed of groups of needles with dimensions ranging from 500µ to 5mm in length and from 13µ to 20µ in diameter, preferable 14µ. The dimensions of the flocks are of approximately 5 mm and they are prepared with a humidity content of less than 0.1 %.

The initial yarn is covered with binders suitable to promote bonding between the aggregates and the cement. The quantity of binders present is characterized by a Content of Organic Substance of 0.70-1.50.

Preferred aggregates for the invention are basalt, porphyry, metalbasite and siliceous aggregates, alone or in a mixture, having grain size distribution of 5-20 mm.

The additive of the invention is characterized by the fact that it is formed of a plurality of small filaments, grouped into flocks or wads according to the attached photograph.

The additive thus prepared is mixed to the concrete, to make it pervious, in a quantity ranging from 1% to 4% of the weight of the cement. Preferably, mixing is performed dry.

The following example, given without intending to be limiting in any way, shows a pervious concrete containing the additive of the invention.

### Pervious concrete

| | |
|---|---|
| Cement | 350 kg |
| Aggregates | 1680 kg |
| Additive | 14 kg |
| Other additives | 7.5 kg |
| Water | 128 kg |

The invention, as described and illustrated above, may be modified to produce variants which nonetheless fall within the scope of the claims below.

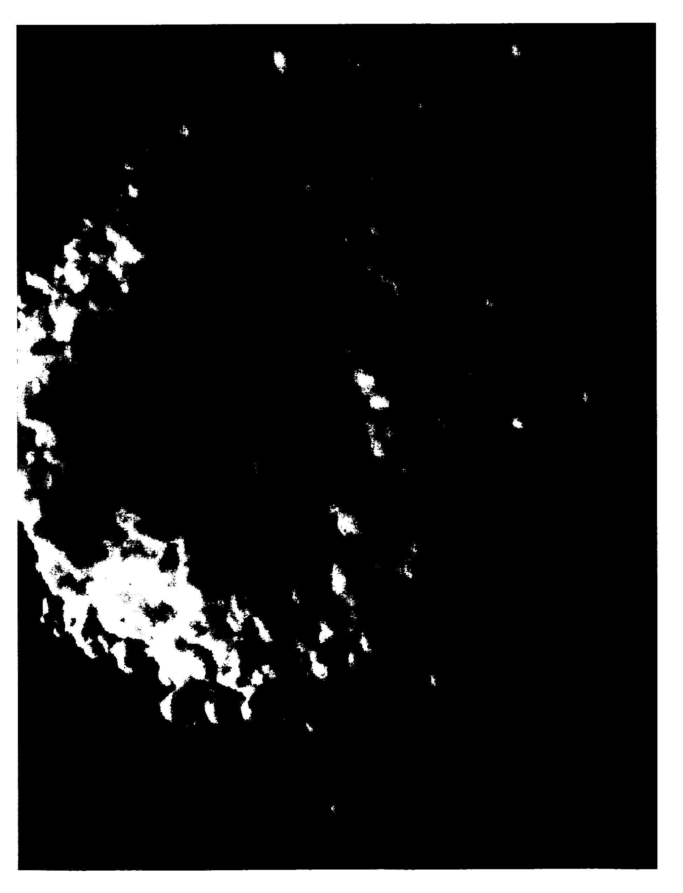

## Claims

1. Additive for pervious concretes, **characterized in that** it is composed of an AR (Alkaline-Resistant) glass yarn.

2. Additive as claimed in claim 1, **characterized in that** said glass yarn is in the form of flocks.

3. Additive as claimed in claim 2, **characterized in that** said flocks are identified by an agglomerate or by groups of needles of said glass yarn.

4. Additive as claimed in claims 2 or 3, **characterized in that** said flocks have a diameter ranging from 3 mm to 5 mm.

5. Additive as claimed in one or more of the previous claims, **characterized in that** said needles of glass yarn have dimensions ranging from 500µ to 5 mm in length and from 13µ to 20µ in diameter.

6. Additive as claimed in claim 5, **characterized in that** said needles of glass yarn have a length of 14µ.

7. Additive as claimed in one or more of the previous claims, **characterized in that** it has a humidity content of less than 0.1 %.

8. Additive as claimed in one or more of the previous claims, **characterized in that** it also comprises binders suitable to promote bonding between the aggregates and the cement, in a quantity **characterized by** a Content of Organic Substance of 0.70-1.50.

9. Pervious concrete, **characterized in that** it comprises the additive as claimed in one or more of the previous claims.

10. Pervious concrete, as claimed in claim 9, **characterized in that** it contains from 1% to 4% of said additive with respect to the weight of the cement.

11. Pervious concrete, as claimed in one or more of the previous claims, **characterized in that** it has the following composition:
| | |
|---|---|
| Cement | 350 kg |
| Aggregates | 1680 kg |
| Additive | 14 kg |
| Other additives | 7.5 kg |
| Water | 128 kg |

12. Pervious concrete, as claimed in one or more of the previous claims, **characterized in that** it has a permeability to water of 8 litres/10 sec.cm².

13. Pervious concrete, as claimed in one or more of the previous claims, **characterized in that** it contains aggregates chosen from basalt, porphyry, metalbasite and siliceous aggregates, alone or in a mixture.

14. Pervious concrete as claimed in claim 13, **characterized in that** said aggregates have a grain size distribution of 5-20 mm.
